# EUROPEAN PATENT SPECIFICATION

(11) **EP 3 649 830 B1**
(45) Date of publication and mention of the grant of the patent: **03.01.2024**
(21) Application number: 18733633.4
(22) Date of filing: 01.07.2018
(51) Int. Cl.: H05B 6/12, F24C 7/06

(54) **A COOKING HOB COMPRISING A HEATING ELEMENT PROVIDED WITH A FASTENING SYSTEM**
EIN KOCHFELD MIT HEIZELEMENT AUFWEISEND EIN BEFESTIGUNGSSYSTEM
UNE PLAQUE DE CUISSON AVEC ÉLÉMENT CHAFFANT AYANT UN SYSTÈME DE FIXATION

(30) Priority: 03.07.2017 EP 17179401
(43) Date of publication of application: 13.05.2020
(73) Proprietor: Electrolux Appliances Aktiebolag, 105 45 Stockholm (SE)
(72) Inventor: PAOLINI, Claudio, 47100 Forli (IT); JEANNETEAU, Laurent, 47122 Forli (IT); MILANESI, Filippo, 47122 Forli (IT); VIROLI, Alex, 47122 Forli (IT)
(74) Representative: Electrolux Group Patents
(86) International application number: PCT/EP2018/067723
(87) International publication number: WO 2019/007863

(56) References cited:
- EP-A1- 0 211 484
- EP-A1- 2 144 007
- WO-A2-2008/080944
- CN-U- 201 887 971
- CN-U- 203 457 355
- DE-A1- 10 206 062
- DE-A1-102004 062 276
- DE-A1-102007 032 757
- DE-C1- 4 202 807
- JP-A- 2005 166 568
- JP-U- S5 772 006
- JP-Y1- S 431 198
- US-A- 6 157 011
- US-A1- 2016 234 889
- US-A1- 2016 313 009

## Description

The present invention relates to a cooking hob with a heating element and a fastening system according to claim 1. In particular, the present invention relates to an induction cooking hob with a fastening system for an induction coil.

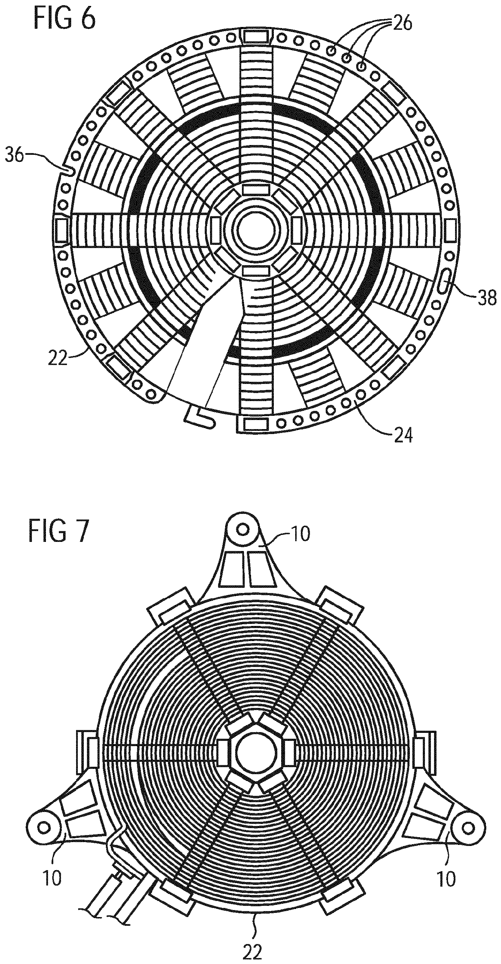

Usually, a heating element of a cooking hob has predetermined fixing points. FIG 7 illustrates a schematic top view of the heating element 22 for the cooking hob with fastening elements 10 according to the prior art. The heating element 22 may be an induction coil 22 or a radiant heating element. The heating element 22 comprises three fastening elements 10. Said fastening elements 10 are arranged at predefined positions at the heating element 22. The positions of the fastening elements 10 at the heating element 22 cannot be varied. The heating element 22 with the fastening elements 10 cannot be adapted to special geometric conditions of the cooking hob. In that, the heating element 22 is designed for being used in a specific cooking hob, or a specific cooking hob platform, and there is no flexibility to use the heating element 22 for another cooking hob or another cooking hob platform with a design or structure which is even only slightly different from the specific one.

US 2016/313009 A1 discloses a spring clip for coupling an electric burner unit with a support structure of a glass-ceramic cooktop. The spring clip comprises a body, a retention tab, a retention arm and a snap tab. The spring clip engages with a support structure of the cooktop by engagement of the snap tab with a corresponding tab aperture in the support structure. The spring clip engages further with a housing of a burner unit by insertion of the retention tab into a hole disposed on a bottom wall of the housing and the retention arm is configured so as to be biased against a side wall of the housing when the retention tab is assembled within the hole.

From EP 0 211 484 A1 a heating unit for supporting in an opening in a hob-plate having a heating surface in the form of a glass-ceramic plate. The heating surface is surrounded by a bezel. A housing carries a heating element support having a peripheral wall, which housing is secured to the bezel by a plurality of circumferentially-spaced straps forming a rigid unit, with the glass-ceramic plate clamped between the bezel and the wall of the heating element support.

DE 10 2007 032757 A1 discloses a cooking device comprising an induction unit and a fastening unit adapted to fasten the induction unit to a cooking hob panel. The fastening unit comprises fastening means configured to establish a snap-on connection. The fastening means comprise clamps, which are glued to the panel with a base plate and which have spring elements adapted to provide a spring-loaded engagement with a circumferential edge of the induction unit.

CN203457355U discloses a further cooking device known in the art.

It is an object of the present invention to provide a cooking hob with a fastening system for a heating element, which allows a flexible arrangement of the heating element both on one and the same cooking hob and on different cooking hobs, in particular cooking hobs from different product platforms.

The object is achieved by the cooking hob according to claim 1.

According to the present invention a cooking hob comprising at least one heating element, in particular an induction coil of an induction cooking hob, and at least one fastening system is provided, wherein the fastening system comprises at least three fastening elements comprising a main body connectable or connected to a support structure of the cooking hob, particularly to a bottom and/or side wall of the cooking hob. The at least one fastening element comprises a hook element which is moveable into or towards the main body of the fastening element.

In an embodiment that does not form part of the present claimed invention, the at least one fastening element comprises a screw which is moveable into or towards the main body of the fastening element.

In an embodiment that does not form part of the present claimed invention, another alternative solution to the hook element or the screw, respectively, may be a fitting element, or the like, being attached to the main body and having a spring function in order to resiliently enable the assembly of the heating element and, at the end of the assembling process, to move towards or into the main body.

The main body is formed as a pillar.

Further according to the present invention, the heating element is at least partially enclosed by a border with a plurality of fixing holes, wherein each fixing hole is engageable or engaged with a snap-in mechanism of the fastening system.

Finally, also according to the invention, the fastening elements are fixable in arbitrary positions along the circumference of the heating element by initially fixing the fastening elements in their dedicated fixing hole and, thereafter, connecting the fastening elements, with their main bodies, to the support structure of the cooking hob.

In particular, at least one fastening element includes a snap-in mechanism connectable or connected to a fixation hole of the heating element, wherein preferably the snap-in mechanism includes a fixed hook element arranged directly on the main body and/or a moveable hook element connected to the main body via a flexible supporting arm. This embodiment may also comprise the solution of the moveable hook element and the fixed hook element being contacting each other or being connected to each other or being marginally spaced from each other in an unstressed state of the snap-in mechanism.

As an alternative solution, the snap-in mechanism may include two moveable hook elements, each one being connected to the main body via a dedicated flexible supporting arm. Also this alternative solution may provide for the situation that the two hook elements are contacting each other or are connected to each other or are marginally spaced from each other in an unstressed state of the snap-in mechanism.

The target for the present invention, to provide a fastening system enabling the fastening elements to be fixable in arbitrary positions along the circumference of the heating element, is achieved. Thus, the shape of the heating element with the fastening elements may be variable and may be adaptable to the geometric conditions of the cooking hob.

Preferably, the fixed hook element is arranged directly on a top side of the main body.

In particular, the moveable hook element is connected to the top side of the main body via the flexible supporting arm.

The fastening element may be formed as a single-piece part. Additionally or alternatively, the fastening element may be made of plastics.

The fastening elements may be connectable or connected to the support structure, in particular with their main body, by means of gluing, screwing, snapping, frictionally engaged fastening or any other connecting means. Alternatively, the fastening elements may be already part of the support structure, in particular in a one-piece solution, e. g. the fastening means are moulded in case of not only the fastening element but also the support structure being made of plastics.

In an embodiment that does not form part of the present claimed invention, a screw is insertable or screwable into said main body or pillar, respectively. The screw is an alternative to the snap-in mechanism including the fixed hook element and/or the moveable hook element. In that, the main body or the pillar, respectively, may be a socket with a hole or bore at its top or assembling side, working as a reception for the screw.

According to a specific embodiment, the moveable hook and/or the screw is or are supported by a supporting arm which is connected to or arranged at the main body of the fastening element, in particular at a top side of the main body.

The fastening system comprises one, or at least one, heating element which is at least partially enclosed by a border with a plurality of fixing holes, wherein said fixing hole is engageable or engaged with the snap-in mechanism of the fastening element.

In particular, the fixed hook element and/or the moveable hook element penetrate the fixing hole, when said fixing hole is engaged with the snap-in mechanism of the fastening element.

Preferably, at least one fastening element of the fastening system includes at least one electric connector connectable or connected to a complementary electric connector of the heating element. In a preferred embodiment, the fastening element comprising the electric connector is of the same shape as the fastening element without such connector in order to enable a flexible arrangement within the cooking hob.

For example, at least one fastening element of the fastening system includes at least one socket connectable or connected to a plug of the heating element. Additionally or alternatively, the at least one socket may be connected or wired with a power cable and/or a signal or sensor cable, the cable or cables being connected or connectable to an electric or electronic component or module of the cooking hob. Such electric or electronic component or module may be a power board or a user interface or a controller of the cooking hob.

The plug of the heating element may be connected to windings of the induction coil or a heating wire via power cables and/or to a sensor of the heating element via sensor cables.

In particular, the fixing hole of the heating element is penetrable by the fixed hook element and/or the moveable hook element, when said fixing hole is engaged with the fastening system, e. g. with the snap-in mechanism of the fastening system.

Preferably, the fixing holes are arranged along a circular path in the border of the heating element.

Further, at least one of the fixing holes is formed as a poka yoke element, wherein preferably said poka yoke element is a recess opened to an outer edge of the border and/or said poka yoke element is a slot or a key hole. Preferably, two or three of the fixing holes are formed as poka yoke elements. The poka yoke elements guarantee the correct installation of the heating element at the fastening elements. In an embodiment, not only the fixing hole but also the dedicated fastening element is formed as a poka yoke element. With such pair of aligned poka yoke elements, an even improved correct installation is guaranteed.

The poka yoke element may also work as positioning indicator, when the specific type of heating element is used in different hob solutions or platforms. With the help of this assembling aid, an assembly line worker is enabled to fit the heating element into the cooking hob in correct position.

Moreover, the heating element may include at least one electric connector connectable or connected to a complementary electric connector of the fastening system.

For example, the heating element includes at least one plug connectable or connected to at least one socket of the fastening system.

The plug of the heating element may be connected to windings of the induction coil or a heating wire via power cables and/or to a sensor of the heating element via sensor cables.

The assembling of the heating element in the cooking hob is performed by initially fixing the fastening elements in their dedicated fixation holes and, thereafter, connecting the fastening elements, with their main bodies, to the support structure of the cooking hob. In a preferred embodiment, however, the assembling starts with a connection of the fastening elements at the support structure of the cooking hob, followed by an assembling of the heating element into the fastening system. Naturally, in case of the fastening elements being already in place within the cooking hob or its support structure, in particular if moulded with the support structure, the heating element can be directly fastened on the fastening system.

Novel and inventive features of the present invention are set forth in the appended claims.

The present invention will be described in further detail with reference to the drawings, in which
- FIG 1: illustrates a schematic sectional side view of a fastening element of a fastening system according to a preferred embodiment of the present invention,
- FIG 2: illustrates a schematic sectional side view of the fastening element with an electric connector according to the preferred embodiment of the present invention,
- FIG 3: illustrates three sectional side views of the fastening element during connecting said fastening element to a heating element according to the preferred embodiment of the present invention,
- FIG 4: illustrates a schematic sectional side view of the fastening element with the electric connector in an electric connection to the heating element to the preferred embodiment of the present invention,
- FIG 5: illustrates a schematic top view of the heating element according to the preferred embodiment of the present invention,
- FIG 6: illustrates a schematic top view of the heating element according to a further embodiment of the present invention, and
- FIG 7: illustrates a schematic top view of the heating element with fastening elements according to the prior art.

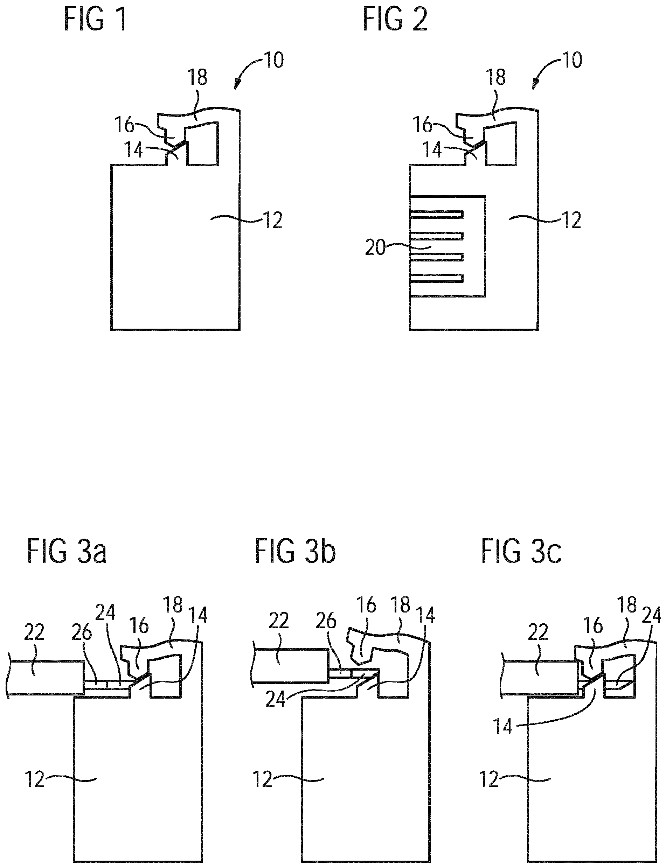

FIG 1 illustrates a schematic sectional side view of a fastening element 10 of a fastening system according to a preferred embodiment of the present invention. The fastening system is provided for fastening a heating element 22 on a cooking hob. For example, the heating element 22 is an induction coil or a radiant heating element.

The fastening element 10 comprises a pillar 12 and a snap-in mechanism. In this example, the snap-in mechanism is arranged above the pillar 12. The snap-in mechanism includes a fixed hook element 14 and a moveable hook element 16. The fixed hook element 14 is arranged directly on the pillar 12, while the moveable hook element 16 is connected to the pillar 12 via a flexible supporting arm 18. In an unstressed state, the moveable hook element 16 is arranged upon the fixed hook element 14. In this example, the moveable hook element 16 and the fixed hook element 14 are marginally spaced from each other in said unstressed state. Preferably, the fastening element 10 is made of plastics and formed as a single-piece part.

The snap-in mechanism of the fastening element 10 is provided for receiving a border 24 of the heating element. The fastening element 10 is fixed on a bottom or at a side wall of the cooking hob. The fastening system comprises at least three fastening elements 10, wherein said fastening elements 10 are distributed around the heating element 22.

FIG 2 illustrates a schematic sectional side view of the fastening element 10 with an electric connector 20 according to the preferred embodiment of the present invention.

In this example, the electric connector is a socket 20 provided for receiving a plug 30 of the heating element 22. Alternatively, the electric connector 20 may be a plug provided for receiving a socket of the heating element 22. The socket 20 is arranged in the pillar 12 of the fastening element 10.

At least one of the fastening elements 10 of the fastening system includes the socket 20 or electric connector 20, respectively. Thus, the fastening system provides a mechanical and electric connection between the heating element 10 and the cooking hob.

FIG 3 illustrates three sectional side views of the fastening element 10 during connecting said fastening element 10 to the heating element 22 according to the preferred embodiment of the present invention.

FIG 3a shows a situation, in which the fastening element 10 and the heating element 22 are not yet connected to each other. The border 24 of the heating element 22 encloses partially or completely said heating element 22. A plurality of fixation holes 26 is formed in the border 24 of the heating element 22. One of the said fixation holes 26 is provided for receiving the fixed hook element 14 and/or the moveable hook element 16 of the snap-in mechanism.

FIG 3b shows a situation, in which the border 24 of the heating element 22 is pushed into the snap-in mechanism of the fastening element 10. Thereby the border 24 pushes upwards the moveable hook element 16, wherein the flexible supporting arm 18 is in a stressed state. The direction of assembling is perpendicular or radially to a centre axis of the fastening element 10, i. e. to the centre axis of the pillar 12.

As can be also seen in FIG 3b, for an eased assembling, the fixed hook element 14 comprises an inclined insertion surface which is the top surface of the fixed hook element 14. Also the border 24 of the heating element 22 comprises at its outer edge an inclined insertion surface which is symmetrically and opposite the inclined insertion surface of the fixed hook element 14. Finally, the moveable hook element 16 comprises an inclined insertion surface, too, which is mirror-symmetrical to the inclined insertion surface of the fixed hook element 14 at the insertion side of the hook elements 14, 16. The pair of inclined insertion surfaces at the fixed hook element 14 and the moveable hook element 16 provide for a triangular (in its cross-section) insertion section which enables a particularly easy assembling.

FIG 3c shows a situation, in which the fastening element 10 and the heating element 22 are connected to each other. The fixed hook element 14 and/or the moveable hook element 16 of the snap-in mechanism penetrate one of the fixing holes 26 in the border 24 of the heating element 22. The flexible supporting arm 18 is in the unstressed state. This is also the state of a finalized assembling and fastening of the heating element 22 in the snap-in mechanism. In this state, the heating element is resting on the top side of the pillar 12, so that the pillar 12 works as a support for the heating element 22.

The connection between the fastening element 10 and the heating element 22 can be made without any tools. Further, the fastening element 10 can be disconnected from the heating element 22 by pulling upwards the moveable hook element 16 and the flexible supporting arm 18, wherein no tool is required.

In order to provide an easy assembling operation when considering a fixation of the heating element 22 with three or more fastening elements 10 which are widely spaced from each other, the fastening elements 10 may be mounted or designed with some flexibility in radial direction. Additionally or alternatively, the fixation holes 26 may comprise respective clearances.

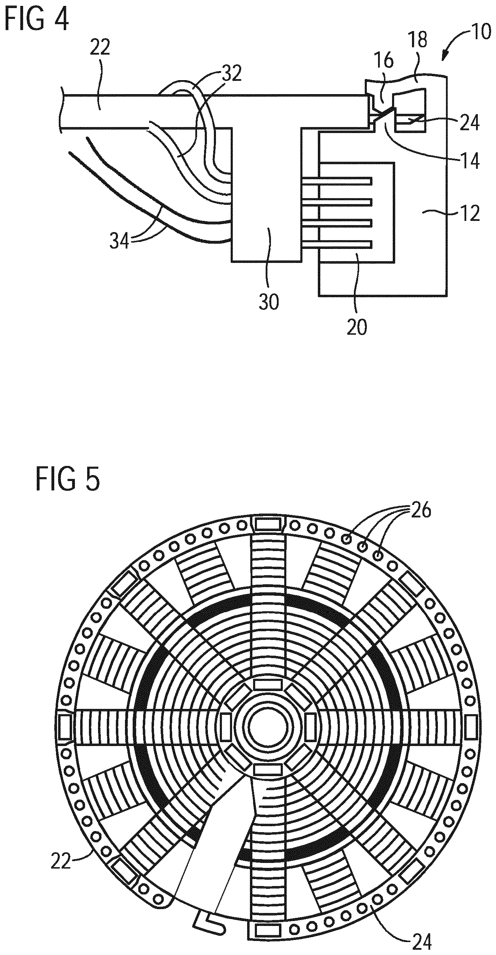

FIG 4 illustrates a schematic sectional side view of the fastening element 10 with the electric connector 20 in an electric connection to the heating element 22 according to the preferred embodiment of the present invention.

The heating element 22 includes the plug 30, at least two power cables 32 and at least two sensor cables 34. The plug 30 is connected to the socket 20 of the fastening element 10. The power cables 32 are interconnected between the plug 30 and the windings of the induction coil or heating wire. The sensor cables 34 are interconnected between the plug 30 and a sensor of the heating element 22.

FIG 5 illustrates a schematic top view of the heating element 22 according to the preferred embodiment of the present invention.

In this example, the heating element 22 is an induction coil 22. Alternatively, the heating element 22 may be a radiant heating element.

The heating element 22 is enclosed by the border 24. The plurality of fixing holes 26 is formed in the border 24 of the heating element 22. In this example, the border 24 comprises seven groups of fixing holes 26, wherein in turn each group includes seven fixing holes 26. Preferably, the fixing holes 26 are arranged along a circular path. The plurality of fixing holes 26 allows a flexible arrangement of three or more fastening elements 10 at the heating element 22. The same heating element 22 can be used in different applications. The positions of the three or more fastening elements 10 at the heating element 22 can be adapted to the geometric conditions of the cooking hob.

FIG 6 illustrates a schematic top view of the heating element 22 according to a further embodiment of the present invention. The heating element 22 of FIG 6 is similar as the heating element 22 shown in FIG 5.

Additionally, some of the fixing holes 26 are formed as poka yoke elements 36. The poka yoke elements 36 guarantee the correct installation of the heating element 22 at the fastening elements 10. One poka yoke element is formed as a recess 36 opened to an outer edge of the border 24. Other poka yoke elements form a slot 38. Further, the poka yoke element may be formed as a key hole.

In an embodiment that does not form part of the present claimed invention, alternatively, the fixation holes 26 are penetrated by screws, wherein said screws are inserted in the pillar 12 of the fastening element 10. In this case, the fastening element 10 does not require the snap-in mechanism with the fixed hook element 14 and the moveable hook element 16. The assembly operation, in this case, is executed by just inserting a screw in the fixation hole 26 and, thereafter, tightening the screw in the pillar 12.

In general, the fixation of the heating element 22 may be realized by merely using the fastening element according to FIGs 1 to 4. Alternatively, just using the fixing solution with screws each penetrating a dedicated fixation hole 26 is possible as well. Naturally, a third option could be to combine the aforedescribed fixation solutions with both snap-in mechanism and screw in one and the same cooking hob.

FIG 7 illustrates a schematic top view of the heating element 22 with fastening elements 10 according to the prior art. The heating element 22 may be an induction coil 22 or a radiant heating element. The heating element 22 comprises three fastening elements 10. Said fastening elements 10 are arranged at predefined positions at the heating element 22. The positions of the fastening elements 10 at the heating element 22 cannot be varied. The heating element 22 with the fastening elements 10 cannot be adapted to special geometric conditions of the cooking hob.

In contrast, the fastening system according to the present invention allows the flexible the arrangement of the three or more fastening elements 10 at the heating element 22. The same heating element 22 can be adapted to different geometric conditions of the cooking hob.

### List of reference numerals

- 10: fastening element
- 12: pillar
- 14: fixed hook element
- 16: moveable hook element
- 18: flexible supporting arm
- 20: socket
- 22: heating element, induction coil
- 24: border
- 26: fixation hole
- 30: plug
- 32: power cable
- 34: sensor cable
- 36: poka yoke element, recess
- 38: poka yoke element, slot

## Claims

1. A cooking hob comprising at least one heating element (22), in particular an induction coil (22) of an induction cooking hob, and at least one fastening system for the heating element (22), which fastening system comprises at least three fastening elements (10) comprising a main body (12) connectable or connected to a support structure, in particular to a bottom and/or a side wall, of the cooking hob, wherein at least one fastening element (10) comprises a hook element, the hook element being moveable into or towards the main body (12) of the fastening element (10), wherein the heating element (22) is at least partially enclosed by a border (24) with a plurality of fixing holes (26), wherein the fastening elements (10) are fixable in arbitrary positions along the circumference of the heating element (22) by initially fixing the fastening elements in their dedicated fixing hole (26) and, thereafter, connecting the fastening elements, with their main bodies, to the support structure of the cooking hob,
**characterized in that** the main body (12) of the fastening element (10) is formed as a pillar (12), wherein each fixing hole (26) is engageable or engaged with a snap-in mechanism (14, 16, 18) of the fastening system.

2. The cooking hob according to claim 1,
**characterised in that**
at least one fastening element (10) comprises a moveable hook element (16) and a fixed hook element (14) which are contacting each other or are connected to each other or are marginally spaced from each other in an assembled state of the heating element (22).

3. The cooking hob according to claim 1 or 2,
**characterised in that**
the snap-in mechanism (14, 16, 18) includes a fixed hook element (14) arranged directly on the main body (12) and/or a moveable hook element (16) connected to the main body (12) via a flexible supporting arm (18).

4. The cooking hob according to claim 3,
**characterised in that**
the fixed hook element (14) is arranged directly on a top side of the main body (12), wherein preferably the moveable hook element (16) is connected to the top side of the main body (12) via the flexible supporting arm (18).

5. The cooking hob according to any one of the preceding claims,
**characterised in that**
the fastening element (10) is formed as a single-piece part and/or the fastening element (10) is made of plastics.

6. The cooking hob according to anyone of the preceding claims,
**characterised in that**
the moveable hook element is supported by a supporting arm which is connected to or arranged at the main body (12).

7. The cooking hob according to any one of the claims 2 to 6,
**characterised in that**
the fixed hook element (14) and/or the moveable hook element (16) penetrate the fixing hole (26), when said fixing hole (26) is engaged with the snap-in mechanism (14, 16, 18) of the fastening element (10).

8. The cooking hob according to any one of the preceding claims,
**characterised in that**
at least one fastening element (10) of the fastening system includes at least one electric connector (20) connectable or connected to a complementary electric connector (30) of the heating element (22).

9. The cooking hob according to claim 8,
**characterised in that**
at least one fastening element (10) of the fastening system includes at least one socket (20) connectable or connected to a plug (30) of the heating element (22) and/or connected or wired with a power and/or a signal cable(s) connected or connectable to an electric or electronic module or component of the cooking hob.

10. The cooking hob according to anyone of the preceding claims,
**characterised in that**
the fixing hole (26) is penetrable by the fixed hook element (14) and/or the moveable hook element (16), when said fixing hole (26) is engaged with the fastening system, in particular with the snap-in mechanism (14, 16, 18) of the fastening system, wherein preferably the fixing holes (26) are arranged along a circular path in the border (24) of the heating element (22).

11. The cooking hob according to claim 10,
**characterised in that**
at least one, preferably two or three, of the fixing holes (26) is formed as a poka yoke element (36, 38), wherein preferably said poka yoke element is a recess (36) opened to an outer edge of the border (24) and/or said poka yoke element is a slot (38) or a key hole.

12. The cooking hob according to any one of the claims 10 or 11,
**characterised in that**
the heating element (22) includes at least one electric connector (30) connectable or connected to a complementary electric connector (20) of the fastening system, wherein preferably the heating element (22) includes at least one plug (30) connectable or connected to at least one socket (20) of the fastening system, and wherein said plug (30) of the heating element (22) is connected to windings of the induction coil or a heating wire via power cables (32) and/or to a sensor of the heating element (22) via sensor cables (34) .

## Patentansprüche

1. Kochfeld umfassend mindestens ein Heizelement (22), insbesondere eine Induktionsspule (22) eines Induktionskochfeldes, und mindestens ein Befestigungssystem für das Heizelement (22), wobei das Befestigungssystem mindestens drei Befestigungselemente (10) umfasst, die einen Hauptkörper (12) aufweisen, der mit einer Trägerstruktur, insbesondere einem Boden und/oder einer Seitenwand, des Kochfeldes verbindbar oder verbunden ist, wobei mindestens ein Befestigungselement (10) ein Hakenelement umfasst, wobei das Hakenelement in den oder auf den Hauptkörper (12) des Befestigungselements (10) bewegbar ist,
wobei das Heizelement (22) mindestens teilweise durch eine Umrandung (24) mit einer Vielzahl von Befestigungslöchern (26) umschlossen ist,
wobei die Befestigungselemente (10) in beliebigen Positionen entlang des Umfangs des Heizelements (22) fixierbar sind, indem die Befestigungselemente anfangs in ihrem zugehörigen Befestigungsloch (26) fixiert werden und danach die Befestigungselemente mit ihren Hauptkörpern mit der Trägerstruktur des Kochfelds verbunden werden,
**dadurch gekennzeichnet, dass** der Hauptkörper (12) des Befestigungselements (10) als Säule (12) ausgebildet ist, wobei jedes Befestigungsloch (26) mit einem Einrastmechanismus (14, 16, 18) des Befestigungssystems in Eingriff gebracht werden kann oder in Eingriff steht.

2. Kochfeld gemäß Anspruch 1,
**dadurch gekennzeichnet, dass**
mindestens ein Befestigungselement (10) ein bewegbares Hakenelement (16) und ein feststehendes Hakenelement (14) umfasst, die sich in einem zusammengebauten Zustand des Heizelements (22) berühren oder miteinander verbunden sind oder geringfügig voneinander beabstandet sind.

3. Kochfeld gemäß Anspruch 1 oder 2,
**dadurch gekennzeichnet, dass**
der Einrastmechanismus (14, 16, 18) ein feststehendes Hakenelement (14), das direkt an dem Hauptkörper (12) angeordnet ist, und/oder ein bewegbares Hakenelement (16), das über einen flexiblen Tragarm (18) mit dem Hauptkörper (12) verbunden ist, enthält,

4. Kochfeld gemäß Anspruch 3,
**dadurch gekennzeichnet, dass**
das feststehende Hakenelement (14) direkt an einer Oberseite des Hauptkörpers (12) angeordnet ist, wobei vorzugsweise das bewegbare Hakenelement (16) über den flexiblen Tragarm (18) mit der Oberseite des Hauptkörpers (12) verbunden ist.

5. Kochfeld gemäß einem der vorhergehenden Ansprüche,
**dadurch gekennzeichnet, dass**
das Befestigungselement (10) als einzelnes Teil ausgebildet ist und/oder das Befestigungselement (10) aus Kunststoff gefertigt ist.

6. Kochfeld gemäß einem der vorhergehenden Ansprüche,
**dadurch gekennzeichnet, dass**
das bewegbare Hakenelement durch einen Tragarm getragen wird, der mit dem Hauptkörper (12) verbunden oder an diesem angeordnet ist.

7. Kochfeld gemäß einem der Ansprüche 2 bis 6,
**dadurch gekennzeichnet, dass**
das feststehende Hakenelement (14) und/oder das bewegbare Hakenelement (16) in das Befestigungsloch (26) eindringen, wenn das Befestigungsloch (26) mit dem Einrastmechanismus (14, 16, 18) des Befestigungselements (10) in Eingriff steht.

8. Kochfeld gemäß einem der vorhergehenden Ansprüche,
**dadurch gekennzeichnet, dass**
mindestens ein Befestigungselement (10) des Befestigungssystems mindestens einen elektrischen Verbinder (20) enthält, der mit einem komplementären elektrischen Verbinder (30) des Heizelements (22) verbindbar oder verbunden ist.

9. Kochfeld gemäß Anspruch 8,
**dadurch gekennzeichnet, dass**
mindestens ein Befestigungselement (10) des Befestigungssystems mindestens eine Buchse (20) aufweist, die mit einem Stecker (30) des Heizelements (22) verbindbar oder verbunden ist und/oder mit einem Strom- und/oder Signalkabel verbunden oder verbindbar ist, das mit einem elektrischen oder elektronischen Modul oder Bauteil des Kochfeldes verbunden oder verbindbar ist.

10. Kochfeld gemäß einem der vorhergehenden Ansprüche,
**dadurch gekennzeichnet, dass**
das Befestigungsloch (26) durch das feststehende Hakenelement (14) und/oder das bewegbare Hakenelement (16) durchdringbar ist, wenn das Befestigungsloch (26) mit dem Befestigungssystem, insbesondere mit dem Einrastmechanismus (14, 16, 18) des Befestigungssystems, in Eingriff steht, wobei vorzugsweise die Befestigungslöcher (26) entlang einer Kreisbahn in der Umrandung (24) des Heizelements (22) angeordnet sind.

11. Kochfeld gemäß Anspruch 10,
**dadurch gekennzeichnet, dass**
mindestens eines, vorzugsweise zwei oder drei, der Befestigungslöcher (26) als Poka-Yoke-Element (36, 38) ausgebildet ist, wobei das Poka-Yoke-Element vorzugsweise eine Ausnehmung (36) ist, die zu einer Außenkante der Umrandung (24) geöffnet ist, und/oder das Poka-Yoke-Element ein Schlitz (38) oder ein Schlüsselloch ist.

12. Kochfeld gemäß einem der Ansprüche 10 oder 11,
**dadurch gekennzeichnet, dass**
das Heizelement (22) mindestens einen elektrischen Stecker (30) aufweist, der mit einem komplementären elektrischen Verbinder (20) des Befestigungssystems verbindbar oder verbunden ist, wobei vorzugsweise das Heizelement (22) mindestens einen Stecker (30) enthält, der mit mindestens einer Buchse (20) des Befestigungssystems verbindbar oder verbunden ist, und wobei der Stecker (30) des Heizelements (22) mit Wicklungen der Induktionsspule oder einem Heizdraht über Stromkabel (32) und/oder mit einem Sensor des Heizelements (22) über Sensorkabel (34) verbunden ist.

## Revendications

1. Table de cuisson comprenant au moins un élément chauffant (22), en particulier une bobine d'induction (22) d'une table de cuisson à induction, et au moins un système d'attache pour l'élément chauffant (22), lequel système d'attache comprend au moins trois éléments d'attache (10) comprenant un corps principal (12) raccordable ou raccordé à une structure de support, en particulier à un fond et/ou une paroi latérale, de la table de cuisson, dans laquelle au moins un élément d'attache (10) comprend un élément à crochet, l'élément à crochet étant mobile dans ou vers le corps principal (12) de l'élément d'attache (10),
dans laquelle l'élément chauffant (22) est au moins partiellement entouré par une bordure (24) avec une pluralité de trous de fixation (26),
dans laquelle les éléments d'attache (10) sont fixables dans des positions arbitraires le long de la circonférence de l'élément chauffant (22) en fixant initialement les éléments d'attache dans leur trou de fixation réservé (26) et, après cela, en raccordant les éléments d'attache, avec leurs corps principaux, à la structure de support de la table de cuisson,
**caractérisée en ce que** le corps principal (12) de l'élément d'attache (10) est sous forme de pilier (12), dans laquelle chaque trou de fixation (26) peut entrer en prise ou est en prise avec un mécanisme à encliquetage (14, 16, 18) du système d'attache.

2. Table de cuisson selon la revendication 1,
**caractérisée en ce que**
au moins un élément d'attache (10) comprend un élément à crochet mobile (16) et un élément à crochet fixe (14) qui entrent en contact l'un avec l'autre ou sont raccordés l'un à l'autre ou sont légèrement espacés l'un de l'autre dans un état assemblé de l'élément chauffant (22).

3. Table de cuisson selon la revendication 1 ou 2,
**caractérisée en ce que**
le mécanisme à encliquetage (14, 16, 18) inclut un élément à crochet fixe (14) agencé directement sur le corps principal (12) et/ou un élément à crochet mobile (16) raccordé au corps principal (12) par l'intermédiaire d'un bras de support flexible (18).

4. Table de cuisson selon la revendication 3,
**caractérisée en ce que**
l'élément à crochet fixe (14) est agencé directement sur un côté supérieur du corps principal (12), dans laquelle, de préférence, l'élément à crochet mobile (16) est raccordé au côté supérieur du corps principal (12) par l'intermédiaire du bras de support flexible (18).

5. Table de cuisson selon l'une quelconque des revendications précédentes,
**caractérisée en ce que**
l'élément d'attache (10) est sous forme de pièce monobloc et/ou l'élément d'attache (10) est fait de plastique.

6. Table de cuisson selon l'une quelconque des revendications précédentes,
**caractérisée en ce que**
l'élément à crochet mobile est supporté par un bras de support qui est raccordé au corps principal (12), ou agencé sur ce dernier.

7. Table de cuisson selon l'une quelconque des revendications 2 à 6,
**caractérisée en ce que**
l'élément à crochet fixe (14) et/ou l'élément à crochet mobile (16) pénètrent dans le trou de fixation (26), lorsque ledit trou de fixation (26) est en prise avec le mécanisme à encliquetage (14, 16, 18) de l'élément d'attache (10).

8. Table de cuisson selon l'une quelconque des revendications précédentes,
**caractérisée en ce que**
au moins un élément d'attache (10) du système d'attache inclut au moins un connecteur électrique (20) connectable ou connecté à un connecteur électrique complémentaire (30) de l'élément chauffant (22).

9. Table de cuisson selon la revendication 8,
**caractérisée en ce que**
au moins un élément d'attache (10) du système d'attache inclut au moins une prise (20) connectable ou connectée à une fiche (30) de l'élément chauffant (22) et/ou connectée ou câblée avec un (des) câble(s) électrique et/ou de signal connecté(s) ou connectable(s) à un module ou composant électrique ou électronique de la table de cuisson.

10. Table de cuisson selon l'une quelconque des revendications précédentes,
**caractérisée en ce que**
l'élément à crochet fixe (14) et/ou l'élément à crochet mobile (16) peuvent pénétrer dans le trou de fixation (26), lorsque ledit trou de fixation (26) est en prise avec le système d'attache, en particulier avec le mécanisme à encliquetage (14, 16, 18) du système d'attache, dans laquelle, de préférence, les trous de fixation (26) sont agencés le long d'un chemin circulaire dans la bordure (24) de l'élément chauffant (22).

11. Table de cuisson selon la revendication 10,
**caractérisée en ce que**
au moins un, de préférence deux ou trois, des trous de fixation (26) est sous forme d'un élément anti-erreur (36, 38), dans laquelle, de préférence, ledit élément anti-erreur est un évidement (36) ouvert sur un bord extérieur de la bordure (24) et/ou ledit élément anti-erreur est une fente (38) ou un trou de serrure.

12. Table de cuisson selon l'une quelconque des revendications 10 ou 11,
**caractérisée en ce que**
l'élément chauffant (22) inclut au moins un connecteur électrique (30) connectable ou connecté à un connecteur électrique complémentaire (20) du système d'attache, dans laquelle, de préférence, l'élément chauffant (22) inclut au moins une fiche (30) connectable ou connectée à au moins une prise (20) du système d'attache, et dans laquelle ladite fiche (30) de l'élément chauffant (22) est connectée à des enroulements de la bobine d'induction ou un fil chauffant par l'intermédiaire de câbles électriques (32) et/ou à un capteur de l'élément chauffant (22) par l'intermédiaire de câbles de capteur (34).
